# EUROPEAN PATENT APPLICATION

(11) **EP 3 337 153 A1**
(43) Date of publication of application: **20.06.2018**
(21) Application number: 16204632.0
(22) Date of filing: 16.12.2016
(51) Int. Cl.: H04N 5/225, H04N 5/232

(54) **CAMERA SYSTEM AND METHOD**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Ascherl, Andreas

(57) **Abstract**

The present invention provides a camera system (100). The camera system (100) comprises a first camera (102) configured to capture a first type of at least one scene in front of the camera system (100). The camera system (100) further comprises a second camera (103) configured to capture a second type of the at least one scene in front of the camera system (100). Finally, the first camera (102) and the second camera (103) are configured to operate separately and to operate in combination such, that the camera system (100) is configured to conduct light depth process (302), optical zoom process (401), fast focus process or fast refocus process (402). The present invention further provides a corresponding method.

## Description

### TECHNICAL FIELD

The invention relates to a camera system and a corresponding method.

### BACKGROUND

Although applicable to any system that needs to take or capture an image, photo or video the present invention will mainly be described in conjunction with so called dual camera system comprising a first camera and a second camera. Such dual camera systems are integrated in so called mobile devices, e.g. mobile phone, tablet or compact camera or the like.

Dual camera system comprises typically a master camera and a slave camera. The master camera and slave camera typically do not interact with each other.

The master camera may be e.g. used for photos or videos, wherein the slave camera may be used e.g. panorama photos or panorama videos. In order to obtain such photos or alternatively video sequences each of the here mentioned camera comprises a special lens.

Document CN 203327085 U discloses an immersive video application on mobile phones.

Document US 2012/0074227 A1 discloses a hand held device containing at least one camera with various functions.

Document US 7,949,252 B1 discloses methods and apparatus for light-field capture with large depth of field.

Document US 2010/0080482 A1 discloses a camera auto-focuses using computed blur differences between images of a three-dimensional scene.

Accordingly, there is a need for an improved camera system as well as a corresponding method.

### SUMMARY

The present invention provides a camera system with the features of claim 1 and a method for operating a camera system with the features of claim 11.

The camera system comprises a first camera configured to capture a first type of at least one scene in front of the camera system. The camera system further comprises a second camera configured to capture a second type of the at least one scene in front of the camera system. Finally, the first camera and the second camera are configured to operate separately and to operate in combination such, that the camera system is configured to conduct light depth process, optical zoom process, fast focus process or fast refocus process.

The method for operating a camera system comprises the steps of providing a first type of at least one scene in front of the camera system by a first camera. The method further comprises providing a second type of the at least one scene in front of the camera system by a second camera. The method further comprises operating the first camera and the second camera separately and conducting light depth process, optical zoom process, fast focus process or fast refocus process by combining the operation of the first camera and the operation of the second camera.

The camera system can be used e.g. to take or to capture a photo or video by the first camera. Further, the camera system can be used to take or capture a panoramic photo or panoramic video by the second camera, for example. The first type of the at least one scene can be e.g. a photo and the second type of the at least one scene can be an immersive - e.g. 360° - photo. Under the "scene" also video or video sequences shall be understood.

The first and the second camera can be provided with special lenses, wherein a field of view of the corresponding lenses can be different to each other. The first camera and the second camera may interact with each other by using a special algorithm based on e.g. image or photo processing as well as video or video sequence processing. The first camera and the second camera can be arranged of a rear surface to a mobile device.

Regarding a dual camera phone according to the invention, the first camera is similar with other phones, but according to the invention the second camera has slightly different lens on it. So it is neccessary to correct this second camera with a special algorithm when we need light depth, fast focus/refocus and optical zoom. Such a special algorithm makes defishing and unwrapping (flatting) of the second camera image when light depth and optical zoom with fixed lens features is enabled. The Special algorithm, alignes the first camera image with the second camera image and cropping window from the second camera image in real time and applying some sampling process for fast focus/refocus.

Defish, unwrapping and map/sample are all known techniques in the art. Defish is kind of fisheye to rectilinear algorithm which synthetically converts fisheye image to linear. Unwrapping is used to linearize non-rectangular image.

Map/sample as explained above aligns first camera and second camera image and neglecting unnecessary parts in secondary part. Sample part is needed for fast focus.

The present invention uses the finding that it is difficult to combine different types of cameras comprising specific lenses due to in particular the limitations of the used lenses.

The present invention therefore provides a first camera and a second camera, wherein the first camera can interact with the second camera with respect to the captured first type of the at least on scene und the captured second type of the at least one scene. For example, the first type of the at least one scene and the second type of the at least one scene can be captured or taken of a same object or same environment, wherein a presentation of the said object or the said environment may be different based on the used lenses on or within the first camera and the second camera.

It is understood, that at least the first camera and the second camera may communicate with image processing software based on the special algorithm. The present invention therefore allows in particular a combination of the first camera and the second camera such, that the camera system is configured to conduct light depth process, optical zoom process, fast focus process or fast refocus process.

Further embodiments of the present invention are subject of the further subclaims and of the following description, referring to the drawings.

In one embodiment, the first type of the at least one scene in front of the camera system is based on a narrow lens. The narrow lens of the first camera can be integrated within the first camera. That is, that the narrow lens is not mounted or arranged on the first camera. Alternatively, or in addition the first camera can comprise a combination of further narrow lenses within or on the first camera.

In another embodiment, the narrow lens comprises a field of view between 40° and 70°.

The narrow lens can further comprise a flat or planar surface oblique, in particular perpendicular, to an optical axis of the narrow lens. Therefore the first camera - also called master camera - can be preferably used for gnomonic map projection, for example.

In another embodiment, the second type of the at least one scene in front of the camera system is based on a wide angle lens or ultra-wide angle lens. Under the term "wide angle lens" a panomorph lens can be understood. The panomorph lens can be specifically designed to improve the optical performances in predefined zones of interest or in the whole image compared to ultra-wide angle lens, such as a fisheye lens. The ultra-wide angle lens can be e.g. the fisheye lens that produces strong visual distortion intended to create a wide panoramic or hemispherical image. The fisheye lens can e.g. achieve extremely wide angles of view by forgoing producing images with straight lines of perspective (rectilinear images), opting instead for a special mapping (for example: equisolid angle), which gives images a characteristic convex non-rectilinear appearance.

In one embodiment, the wide angle lens comprises a field of view between 64° and 84°. A lens is considered wide-angle when it covers the angle of view between 64° and 84° which in return translates to 35 to 24mm lens in 35mm film format. Therefore, the optical performance of the optical system can be improved.

In another embodiment, the ultra-wide angle lens comprises a field of view greater than 84°. Therefore, the wide panoramic or hemispherical image can be efficiently captured by the strong visual distortion.

In one embodiment, the light depth process and the optical zoom process are conducted by defishing and unwrapping. By the here described second camera immersive (360°) photo can be taken or immersive (360°) video can be recorded. The second camera comprises the wide angle lens or the ultra-wide angle lens, wherein preferably the said wide angle lens or the said ultra-wide angle lens is arranged or mounted on the second camera to capture the second type of the at least one scene in front of the camera system. The light depth process and the optical zoom process are preferably conducted by defishing and unwrapping of the second type of the at least one scene. Thus the first camera and the second camera can be combined such to obtain an output image or video after the light depth process or after the optical zoom process.

In a further embodiment, the fast focus process or the fast refocus process are conducted by mapping the first type of the at least one scene to the second type of the at least one scene and sampling. That is that fast focus process or the fast refocus process can be e.g. conducted by mapping a master image, photo or video of the first camera to a slave image, photo or video of the second camera and sampling, Thus, the first camera and the second camera can be combined such to obtain an output photo or video after the fast focus process or the fast refocus process.

In one embodiment, the first type of the at least one scene comprises a photo or a video sequence of the first camera and the second type of the at least one scene comprises a photo or a video sequence of the second camera. That is that any combination of the first type of the at least one scene and the second type of the at least one scene can be conducted to realize the light depth process, optical zoom process, fast focus process or fast refocus process.

In another embodiment, the first camera and the second camera are located adjacent to each other, wherein a distance between the optical axis of the narrow lens of the first camera and the optical axis of the wide angle lens or the ultra-wide angle lens of the second camera is between 10 and 30 millimeter. Therefore the here described light depth process, optical zoom process, fast focus process or fast refocus process can be easily optimized. Further the defishing, unwrapping, mapping and sampling can be conducted in a time efficient manner, since an overlapping of data of the first type of the at least one scene and data of the second type of the at least one scene can be in particular increased.

In one embodiment, the operation of the first camera and the operation of the second camera for conducting the light depth process or the optical zoom process are based on defishing and unwrapping.

In a further embodiment, the operation of the first camera and the operation of the second camera for conducting the fast focus process or the fast refocus process are based on mapping the first type of the at least one scene to the second type of the at least one scene and sampling.

The invention further relates to a mobile device, such as a mobile phone, tablet or compact camera, comprising the here described camera system, wherein the camera system is arranged or mounted on the rear surface of the mobile device.

The here described features for the camera system are also disclosed for the method for operating the camera system as well as vice versa.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a schematic view of an embodiment of a camera system according to the present patent application;
- Fig. 2: shows a schematic side view of the camera system according to the present patent application;
- Fig. 3: shows a block diagram of an embodiment of a camera system according to the present patent application;
- Fig. 4: shows a block diagram of another embodiment of a camera system according to the present patent application; and
- Fig. 5: shows a flow diagram of an embodiment of a method according to the present patent application

In the figures like reference signs denote like elements unless stated otherwise.

### DETAILED DESCRIPTION OF THE DRAWINGS

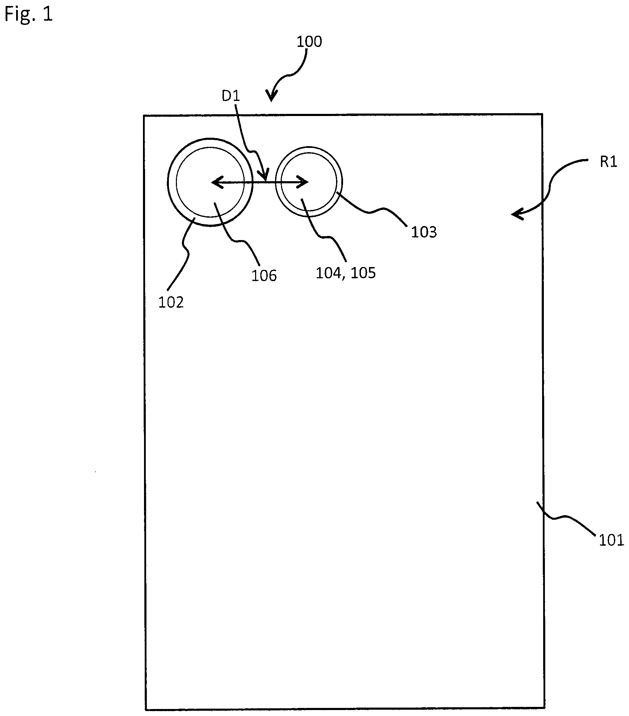

Fig. 1 shows a schematic view on a back or rear surface R1 of an embodiment of a camera system 100 according to the invention. The camera system 100 is arranged or mounted in or on a mobile device 101, such as a mobile phone, tablet or compact camera. The camera system 100 comprises a first camera 102 und a second camera 103. The first camera 102 can be a master camera and the second camera 103 can be slave camera.

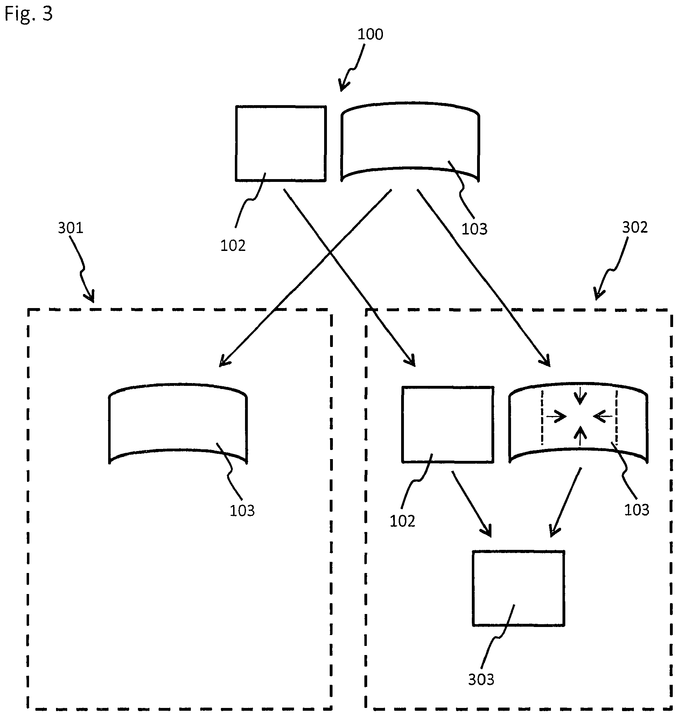

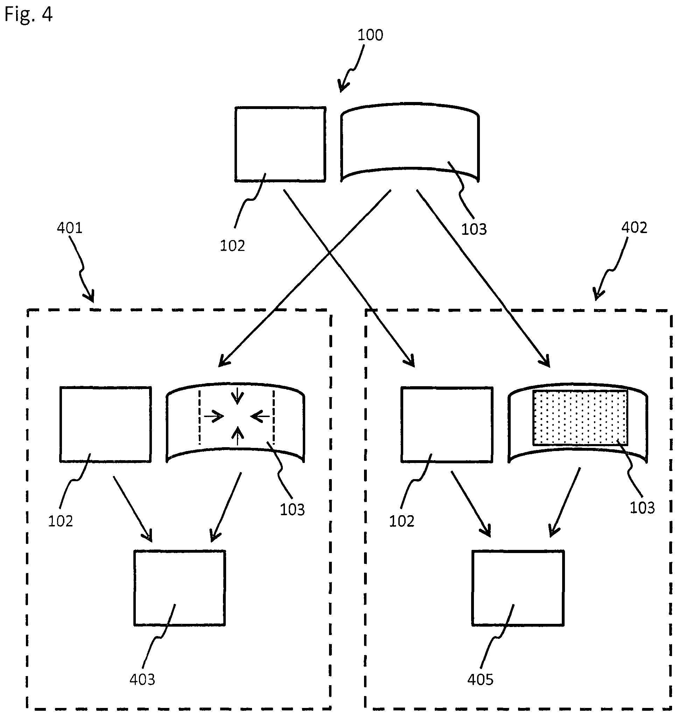

The first camera 102 is configured to capture a first type of at least one scene in front of the camera system 100. The second camera 103 is configured to capture a second type of the at least scene in front of the camera system 100, wherein the first camera 102 and the second camera 103 are configured to operate separately and to operate in combination such, that the camera system 100 is configured to conduct light depth process 302, optical zoom process 401, fast focus process or fast refocus process 402 (see Figs. 3 and 4).

The first camera 102 comprises a narrow lens 106, wherein the first type of the at least one scene in front of the camera system 100 is based on a narrow lens 106. The narrow lens 106 can comprise a field of view between 40° and 70°. The first camera 102 - also called master camera - can be preferably used for gnomonic map projection, for example.

The second camera 103 comprises a wide angle lens 104 or an ultra-wide angle lens 105, wherein the second type of the at least one scene in front of the camera 100 is based on the wide angle lens 104 or the ultra-wide angle lens 105. The wide angle lens 104 can be a panomorph lens. The ultra-wide angle lens 105 can be a fisheye lens. The second camera 103 may comprise the panomorph lens or the fisheye lens to capture or provide an immersive (360°) scene, photo and/or video, for example.

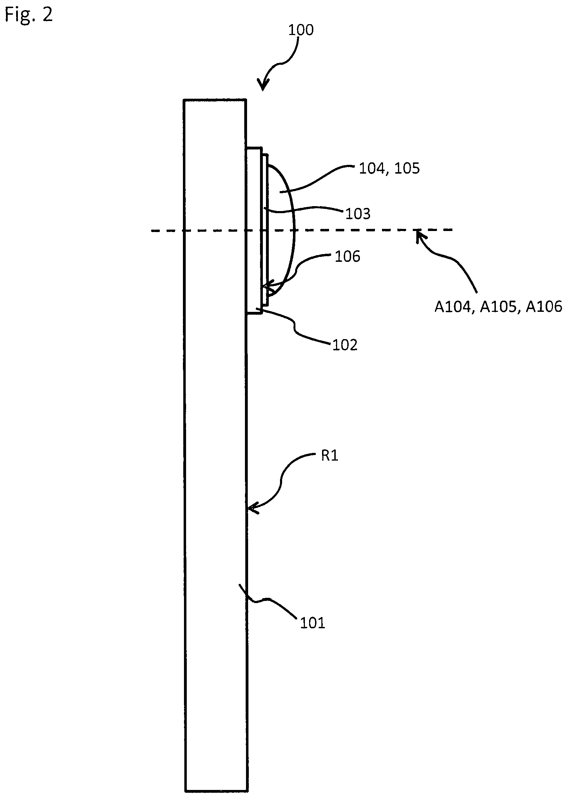

The corresponding optical axes A104, A105, A106 of the first camera 102 or rather the narrow lens 106 and the second camera 103 or rather the wide angle lens 104 or ultra-wide angle lens 105 have a distance D1 to each other (see Fig. 2). Therefore the here described light depth process 302, the optical zoom process 401, fast focus process or fast refocus process 402 can be easily optimized. Further defishing, unwrapping, mapping and sampling can be conducted in a time efficient manner, since an overlapping of data of the first type of the at least one scene and data of the second type of the at least one scene can be in particular increased.

Fig. 2 shows a schematic side view of the camera system 100.

Fig. 2 is based on Fig. 1 and illustrates the side view of the mobile device 101 with the camera system 100, wherein the optical axis A106 of the narrow lens 106, the optical axis A104 of the wide angle lens 104 and the optical axis A105 of the ultra-wide angle lens 105 are shown. In Fig 2 the optical axes A104, A105, A106 overlap to each other.

The first type of the at least one scene in front of the camera system 100 is based on a narrow lens 106. The narrow lens 106 of the first camera 102 can be integrated within the first camera 102. The narrow lens 106 can comprise a field of view between 40° and 70°. The narrow lens 106 can further comprise a flat or planar surface oblique, in particular perpendicular, to the optical axis A106 of the narrow lens 106. Therefore the first camera 102 - also called master camera - can be preferably used for gnomonic map projection, for example.

The second type of the at least one scene in front of the camera system 100 is based on a wide angle lens 104 or ultra-wide angle lens 105. The wide angle lens can be a panomorph lens. The panomorph lens can be specifically designed to improve the optical performances in predefined zones of interest or in the whole image compared to ultra-wide angle lens 105, such as a fisheye lens. The ultra-wide angle lens 105 can be e.g. the fisheye lens that produces strong visual distortion intended to create a wide panoramic or hemispherical image. The fisheye lens can e.g. achieve extremely wide angles of view by forgoing producing images with straight lines of perspective (rectilinear images), opting instead for a special mapping (for example: equisolid angle), which gives images a characteristic convex non-rectilinear appearance. The wide angle lens 104 can in particular comprise a field of view between 64° and 84°. A lens is considered wide-angle when it covers the angle of view between 64° and 84° which in return translates to 35 to 24mm lens in 35mm film format. Therefore, the optical performance of the optical system 100 can be improved.

The ultra-wide angle lens 105 can comprise a field of view greater than 84°. Therefore, the wide panoramic or hemispherical image can be efficiently captured by strong visual distortion.

Fig. 3 shows a block diagram of an embodiment of the camera system 100 to further explain a functionality of the camera system 100. In Fig. 3 and Fig. 4 the here described lenses 104, 105, 106 are not explicitly shown, but it is clear from the context of the invention that the first camera 102 and the second camera 103 can comprise the above mentioned lenses 104, 105, 106.

Fig. 3 shows the second type of the at least one scene, photo or video based on an immersive (360°) process 301 of the camera system 100. The immersive (360°) process 301 has been conducted by the second camera 103. The corresponding photo or video has been taken, captured or recorded by the second camera 103 preferably based on the wide angle lens 104 or the ultra-wide angle lens 105. For the immersive (360°) process 301 data of the first camera 102 can be neglected.

Fig. 3 further shows the light depth process 302 based on the here described camera system 100. The light depth process 302 is conducted by defishing and unwrapping. The defishing and the unwrapping conducted by the second camera 103 (indicated by the opposing arrows) in combination with the first type of the at least one scene of the first camera 102 results in an output photo or video 303 after the light depth process 302.

Fig. 4 shows a block diagram of another embodiment of the camera system 100.

Fig. 4 shows the optical zoom process 401 based on the here described camera system 100. The optical zoom process 401 is also conducted by defishing and unwrapping. The defishing and the unwrapping conducted by the second camera 103 (indicated by the opposing arrows) in combination with the first type of the at least one scene of the first camera 102 results in an output photo or video 403 after the optical zoom process 401.

Fig. 4 further shows the fast focus process or the fast refocus process 402 based on the here described camera system 100. The fast focus process or the fast refocus process 402 is conducted by mapping the first type of the at least one scene to the second type of the at least one scene and sampling. The mapping of the first type of the at least one scene to the second type of the at least one scene and the sampling
conducted by the second camera 103 (indicated by the dotted area) in combination with the first type of the at least one scene of the first camera 102 results in an output photo or video 405 after the fast focus process or the fast refocus process 402.

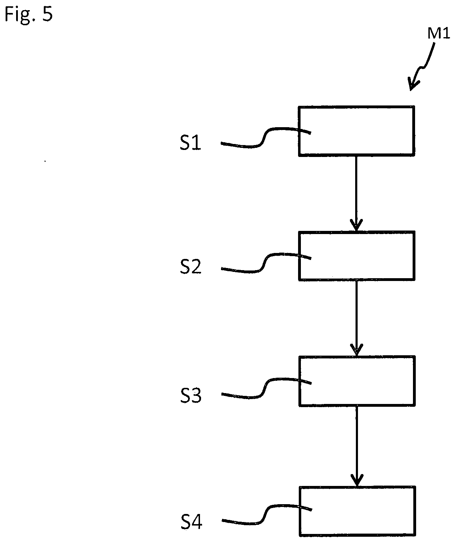

Fig. 5 shows a flow diagram of an embodiment of a method M1 for operating the camera system 100. The method starts with providing S1 a first type of at least one scene in front of the camera system by a first camera 102. A second step S2 comprises providing a second type of the at least one scene in front of the camera system by a second camera 103. A third step S3 comprises operating the first camera 102 and the second camera 103 separately. Finally, in step S4 the light depth process 302, the optical zoom process 401, the fast focus process or fast refocus process 402 are conducted by combining the operation of the first camera 102 and the operation of the second camera 103.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a camera system 100. The camera system 100 comprises a first camera 102 configured to capture a first type of at least one scene in front of the camera system 100. The camera system 100 further comprises a second camera 103 configured to capture a second type of the at least one scene in front of the camera system 100. Finally, the first camera 102 and the second camera 103 are configured to operate separately and to operate in combination such, that the camera system 100 is configured to conduct a light depth process 302, an optical zoom process 401, a fast focus process and/or a fast refocus process 402 by combining the operation of the first camera (102) and the operation of the second camera (103). The present invention further provides a corresponding method.

### List of reference signs

- 100: camera system
- 101: mobile device
- 102: first camera
- 103: second camera
- 104: wide angle lens
- 105: ultra-wide angle lens
- 106: narrow lens
- 301: immersive (360 degree) process
- 302: light depth process
- 303: output photo or video after the light depth process
- 401: optical zoom process
- 403: output photo or video after the optical zoom process
- 402: fast focus or fast refocus process
- 405: output photo or video after the fast focus or fast refocus process
- A104: optical axis of the wide angle lens
- A105: optical axis of the ultra-wide angle lens
- A106: optical axis of the narrow lens

- D1: distance
- R1: rear surface
- M₁: method

- S1-S4: method steps

## Claims

1. Camera system (100), the system comprising:
a first camera (102) configured to capture a first type of at least one scene in front of the camera system (100); and
a second camera (103) configured to capture a second type of the at least one scene in front of the camera system (100);
wherein the first camera (102) and the second camera (103) are configured to operate separately and to operate in combination in such a way that the camera system (100) is configured to conduct light depth process (302), optical zoom process (401), fast focus process or fast refocus process (402).

2. Camera system (100) according to claim 1, wherein the first type of the at least one scene in front of the camera system (100) is based on a narrow lens (106).

3. Camera system (100) according to claim 2, wherein the narrow lens (106) comprises a field of view between 40° and 70°.

4. Camera system (100) according to any one of the preceding claims, wherein the second type of the at least one scene in front of the camera system (100) is based on a wide angle lens (104) or an ultra-wide angle lens (105).

5. Camera system (100) according to claim 4, wherein the wide angle lens (104) comprises a field of view between 64° and 84°.

6. Camera system (100) according to claim 4, wherein the ultra-wide angle lens (105) comprises a field of view greater than 84°.

7. Camera system (100) according to any one of the preceding claims, wherein the light depth process (302) and the optical zoom process (401) are conducted by defishing and unwrapping.

8. Camera system (100) according to any one of the preceding claims, wherein the fast focus process or the fast refocus process (402) is conducted by mapping the first type of the at least one scene to the second type of the at least one scene and sampling.

9. Camera system (100) according to any one of the preceding claims, wherein the first type of the at least one scene comprises a photo or a video sequence of the first camera (102) and the second type of the at least one scene comprises a photo or a video sequence of the second camera (103).

10. Camera system (100) according to any one of the preceding claims, wherein the first camera (102) and the second camera (103) are located adjacent to each other, wherein a distance (D1) between the optical axis (A106) of the narrow lens (106) and the optical axis (A104, A105) of the wide angle lens (104) or the ultra-wide angle lens (105) is between 10 and 50 millimeter.

11. Method (M1) for operating a camera system (100), the method comprising:
providing (S1) a first type of at least one scene in front of the camera system by a first camera (102); and
providing (S2) a second type of the at least one scene in front of the camera system by a second camera (103);
operating (S3) the first camera (102) and the second camera (103) separately; and
conducting (S4) light depth process (302), optical zoom process (401), fast focus process or fast refocus process (402) by combining the operation of the first camera (102) and the operation of the second camera (103).

12. Method (M1) according to claim 11, wherein the operation of the first camera (102) and the operation of the second camera (103) for conducting the light depth process (302) or the optical zoom process (401) are based on defishing and unwrapping.

13. Method (M1) according to claim 11, wherein the operation of the first camera (102) and the operation of the second camera (103) for conducting the fast focus process or the fast refocus process (402) are based on mapping the first type of the at least one scene to the second type of the at least one scene and sampling.

14. Mobile device (101) comprising the camera system of claims 1 to 10, wherein the camera system (100) is arranged on a rear surface (R1) of the mobile device (101).
